# EUROPEAN PATENT APPLICATION

(11) **EP 1 970 121 A1**
(43) Date of publication of application: **17.09.2008**
(21) Application number: 06077264.7
(22) Date of filing: 15.12.2006
(51) Int. Cl.: B01L 3/00, C12M 3/00, G01N 21/01

(54) **A microfluidic chip design comprising capillaries**

(71) Applicant: Universiteit Leiden, 2300 RA Leiden (NL)
(72) Inventor: de Sonneville, Jan, 2613 JB Delft (NL); Abrahams, Jan Peter, 2317 NL Leiden (NL); Noteboom, Mathieu Hubertus Maria, 2352 EH Leiderdorp (NL); Kuil, Maxim Emile, 1064 WJ Amsterdam (NL); Verpoorten, Henk, 2231 AC Rijnsburg (NL)
(74) Representative: van Loon, C.J.J.

(57) **Abstract**

The invention describes a new microfluidic chip design allowing for a connection of capillaries to a microfluidic chip. In a chip according to the invention the fluid channels are closed off with a deformable penetrable substance. A leakage free fluid connection is provided by inserting a capillary through the deformable penetrable substance into the channel. Three different means of anti-clogging features of a capillary are described. The size of the fluid connection is in the order of the diameter of the capillaries used and therefore enables smaller and thinner microfluidic chips comprising many connections. The connection technique can be used in combination with most lab-on-a-chip devices. Many combined techniques and their improvements leading to new possibilities are described. Because the microfluidic chip no longer needs a chip holder or connections on top or bottom during analysis, physical constraints for microscopes disappear. Without physical constraints many different microscopic analysis systems can be used to view the same chip

## Description

### Field of the invention

This invention relates to analysis in fluid environments, in particular analysis in micro fluid environments, in particular microscopic analysis in microscopic fluid environments.

### Background of the invention

In the field of microscopic analysis in microscopic fluid environments microfluidic chips have been developed. Microfluidic chips contain at least one microscopic fluid channel or chamber. One of the dimensions of a microscopic channel or chamber is in the range of 1-500 micrometers. Applications in this field include but are not limited to chemical analysis, biochemical analysis, enzymatic analysis, DNA sequencing and single cell studies.
Microfluidic chips are made of solid or deformable solid material. Solid materials include but are not limited to glass and silicon. Glass and silicon are often used because extensive research has been done on these materials by the semiconductor industry. Lab-on-a-chip devices made out of glass or silicon often include electronics to facilitate flow control and sometimes to allow chemical and/or optical analysis. Lab-on-a-chip devices promise better analysis and performance in particular in terms of higher speed and by reducing the requirement of samples which are sometimes expensive or hard to obtain. Microfluidic chips made of deformable solid material, in particular polydimethylsiloxane (PDMS - also called sylgard) became popular in the field of biochemical research and biological cell studies. Using a molding technique multiple chips can be produced cheaply.
Biological cell studies make use of laminar flow inside a microfluidic chip. Due to the dimensions inside a microfluidic chip the so called Reynolds number is low. When Reynolds number is low, fluids show laminar flow instead of turbulent flow. In laminar flow mixing of fluids mainly occurs by the very slow process of diffusion. This phenomenon is used in single cell studies to create an anisotropic biochemical environment. Many methods using laminar flow to create an anisotropic environment are described in US6653089.
Microfluidic chips have been improved to better control medium, oxygen, CO₂ levels, and the physical microenvironment around cells, this all to better mimic the in vivo habitat.
Making a non-leaking fluidic connection to a microfluidic chip has been proven to be difficult. This may be a reason why commercial applications of PDMS chips is still scarce. Capillary forces prevent the use of gluing, and the small size doesn't allow for easy screw connections. Some prior solutions to these problems are listed below.

The microscopy cell or MicCell (Microfluid Nanofluid 2006, 2:21-36) has been developed as a platform for research in the area of cell biology, biomaterial research and nanotechnology. It offers a solution for viewing inside a microfluidic chip, whereby the chip's channels are only separated from the optics by a cover slip. However the fluidic connections are made in a macroscopic holder using screw connections. The holder is strongly pressed onto the chip to prevent leaking. Due to the holder the MicCell is only suited for inverted microscopy. Inverted microscopy uses reflected for analysis requiring only one side of the chip. The MicCell is not suitable for transmission of light due to the connections on top. Therefore inverted microscopy is the only option.

Another type of connection uses a polymer micro interface (J. Micromech. Microeng. 2004,14:1484-1490). These couplers are attached onto the open channels of a solid microfluidic circuit. The couplers are in millimeter size range and thus allow more connections onto the same chip. A special design was invented to prevent detachment of the connector due to stress. This type of connection can only be attached to the top or bottom of the chip since it requires a surface for attaching the connector.

Another type of connection directly connects a syringe needle into a chip (J. Micromech. Microeng. 2005 15:923-934). It requires a two-step process. First a hole is made by coring a sharp beveled cutting edge syringe needle into the polymer. A cylinder of polymer is removed, creating a cylindrical hole. The opening is positioned onto the opening of the circuit which is in another layer of material. Then another needle can be inserted into this hole to form the connection. So here again the connections are made on top, requiring a rather thick slice of polymer to ensure a proper sealing.

Problems regarding prior art:
1. Connecting the systems described above is complicated and time consuming.
2. Most of the connection techniques described above do not allow for small chips with many more than six connections.
3. Systems described above and other known systems use connections on top or at the bottom of the chip. Connections on top or at the bottom of the chip provide physical constraints for the optics of most microscope analysis systems that make use of transmission of light through the chip. In transmission microscopy when the magnification is increased the focal length is decreased. As a result the objective and condenser lenses must be placed closer to the specimen. Changing objective lenses causes even more constraints as a larger free area is required for the motion of the lenses over the surface of the chip.
4. Some microfluidic systems use chip holders for connection or positioning purposes. These chip holders provide even larger physical constraints for the use of transmission microscopes.

The invention now provides an improvement to these problems.

There is provided a microfluidic chip comprising a body with at least one channel and means for connecting at least one capillary to said body so that the at least one capillary is in fluid connection with said at least one channel, wherein the means for connecting comprise a deformable substance closing off the at least one channel and being penetrable by said at least one capillary.
A body is defined as essentially consisting of a deformable and penetrable solid or a combination of a solid and a penetrable and deformable solid.
In some embodiments a body is made solely of deformable solid. When made of a gas permeable deformable solid such as polydimethylsiloxane (PDMS) it allows for gas and temperature control from the outside of the chip. Also the amount of materials used is then minimized to allow for optimal viewing under a microscope using immersion fluids.

In some embodiments a body is made of a combination of deformable solid and a solid. Materials used for the solid include but are not limited to quartz, glass and perspex. Glass is often used because it allows viewing by light microscopy. When the microscope uses UV light quartz is a good alternative.

In some embodiments, when the chip is used in a dry environment a glass slide is used to protect the deformable solid from attracting dust. PDMS naturally sticks to a variety of solids including glass. When a flat surface of PDMS is provided the van der Waals force creates a strong enough bond between PDMS and the glass slide.

In some embodiments glass or silicon is used to support electronics. When the channels are also made of glass it is possible to only cover the channel ends with deformable penetrable solid to form the required fluid connections.

In some embodiments the electronics are created onto silicon or glass but the channels are made in deformable solid to allow a better gas control and a simpler chip design. The deformable solid containing the channels can be covalently bound to the silicon or glass using an oxygen plasma treatment of the glass/silicon or deformable solid or both before attaching the deformable solid.
A microfluidic chip is typically defined as said body containing at least one fluid channel of which at least one of the dimensions is smaller than 500 µm. In some embodiments the channels are created in a deformable solid and are closed by the use of a glass microscope slide. The microscope slide will stick without extra methods, but when a stronger connection is needed to withstand more pressure, for instance the oxygen plasma technique as described above can be used. With only a microscope slide between microscope and channel, the created chip has optimal viewing properties.

A capillary is defined as having an outer diameter of preferably less than 400 µm and having an inner diameter being larger than the size of particles in the substance used. Note that for the use of injection the thickness of the wall of the capillary, that is the difference between inner and outer diameter must be large enough to withstand the forces applied. And also note that the particles inside the channel experience a shear stress which increases with a smaller inner diameter of the channel and increases with a higher flow speed.

A deformable substance is preferably a polymer to allow for a simple creation using a mould. Preferably PDMS is used for biological experiments as PDMS is proven to be biocompatible and gas permeable. PDMS has however a low shrinkage factor which increases by increasing curing temperature. Therefore it is best to cure the PDMS over a longer time at room temperature and or to allow for shrinkage in the design of the mould, that is to create an extra room/channel connected to the highest point in the mould when curing. The extra piece of PDMS sticking out at this point can after release simply be cut off.

There is provided a microfluidic chip according to the invention, wherein the body furthermore comprises at least one receiving chamber in fluid connection with said at least one channel and said deformable substance closing off at least one side of the receiving chamber, so that the free end of the at least one capillary can be placed in the at least one receiving chamber.

A receiving chamber is defined as a part of a channel with a width that is wider than the channel. The height and width are such that a capillary end can fit inside the receiving chamber. Receiving chambers are typically used when the diameter of the channels on the chip are smaller than the outer diameter of the capillaries used to connect to the microfluidic chip.

In some embodiments more than one capillary can be brought in to fluid connection with a channel or a receiving chamber.
In some embodiments the channels are made of glass and have an open end too small for a capillary to fit in. To these channels a body of deformable solid can be attached, containing the required receiving chambers. The receiving chambers are aligned to the channels in the glass part of the body such that they are in fluid connection with the channels.

There is provided a microfluidic chip according to the invention, wherein at least one analysis chamber is present in fluid connection with at least one channel.
An analysis chamber is defined as a chamber inside a microfluidic chip which is primarily used for the containment of specimen to be analyzed using detection techniques.

There is provided a microfluidic chip according to the invention, having a top and a bottom wall, at least one of which allows inspection of the substance in the at least one channel or chamber using a microscope, as well as having at least one sidewall, the deformable substance closing off the said at least one channel or receiving chamber and being penetrable by said at least one capillary, said deformable substance extending along at least part of said sidewall, so that the said at least one capillary can be mounted in a plane parallel to said top or bottom wall.
In some embodiments a side connection is used to provide more space for the optics of the microscopes. Especially in transmission microscopes the space on top and at the bottom of the chip must be reserved for objective and condenser lenses.

### Freedom of choice regarding detection methods

There is a wide variety of choices when the microfluidic chip is made within the specifications of normal use of the detection systems, that is for example the size of a microscope object glass or a microscope cover slip. No extra chip holders are needed, as the microscope has a good holder for object glasses that can be used. A holder requires that the microscope uses different constraints opposed to the normal object glass. This requires a change in the microscope control software, making the microscope often dedicated to the specific chip holder. When the need of the holder is omitted the microscope used does not need to be dedicated anymore, and is also available for other use. Under most microscopes it is best to place the fluid connection points at the bottom right of the chip. When designed well the same chip can be used under different microscopes. The use of different types of microscopes provides the researcher with different kinds of imaging data. These different images can be correlated and combined to give a deeper insight of the subject studied.
Different detection techniques that are used with the microfluidic chip include but are not limited to:
- Light microscopy, an inverted or transmission light microscope is a good choice for viewing larger areas with less detail. The intensity of light used is low compared to other techniques listed below, and this reduces the amount of damage caused by photo toxicity. Also wide field imaging is a very fast technique.
- Phase contrast microscopy, a phase contrast or phase modulation microscope is used to allow a better study of low contrast substances.
- Fluorescent microscopy, a fluorescent microscope is used to study fluorescent particles inside the substance down to a scale in the order of nanometers.
- Confocal microscopy, a confocal microscope is used to obtain a detailed 3D image of a substance. Confocal imaging uses a layered microscope analysis of the sample, and reconstitutes a 3D image from a set of these layers. Thus imaging is relatively slow, but highly detailed. Also fluorescence imaging can be used in a confocal microscope.
- Total internal reflectance microscopy, a total internal reflectance microscope is used to study in detail a small part of a substance in a channel or chamber behind a thin microscope slide.
- Raman spectroscopy or resonance raman spectroscopy is used to obtain information about the vibrational modes of molecules inside the substance. For each molecule this results in a specific fingerprint. The result is compared with known molecules to identify the molecules inside the channel or chamber.
- Two-photon excitation microscopy, two-photon excitation microscopy is used to study fluorophores in a substance inside a thicker channel or chamber (up to one mm thick). A whole multilayer of cells or cell tissue growing inside a microfluidic chip can be studied using this technique.
- Mass spectrometry, in some embodiments the microfluidic chip comprises a capillary sticking out and in fluid connection with a channel. Through this capillary a substance can be extracted from the chip into the mass spectrometer, using an electric field between the mass spectrometer and the capillary.

Also combinations of techniques described above are possible, these include but are not limited to the use of:
- Light microscopy and confocal microscopy, the substance inside the microfluidic chip is first viewed under a normal light microscope. When the interesting parts are defined the chip is mounted into a confocal microscope for a detailed 3D analysis.
- Fluorescent microscopy and phase contrast microscopy, using one microscope, the substance is first viewed using a fluorescent imaging mode and then phase contrast images are obtained, or vice versa. Correlation of these images is easily done because the viewed object is still located at the same spot.

In some embodiments the microfluidic chip is made with dimensions that comply with the sample size specifications of many microscopes. This is especially useful if one wants to combine different analysis techniques, without the need of expensive designated holder systems or designated microscopes.

In some embodiments there is space on top or bottom for connections. In these embodiments also connections from top or bottom are possible.

In some embodiments there are multiple connection points situated on the side, top and bottom of a channel or receiving chamber of a microfluidic chip to use a plurality of angles to connect the microfluidic chip.

There is provided a microfluidic chip according to the invention, comprising means to connect multiple capillaries to at least one sidewall, allowing for simultaneous parallel connection.

In some embodiments microfluidic chips are used as disposables. To allow for a simple and fast connection, the connection points are located on a side of the chip. Connections on that side can be made simultaneously.

In some embodiments a connector is used to connect multiple capillaries at once. The capillaries are held together by the connector, and are aligned to said receiving points on the side of the microfluidic chip.

In some embodiments the connector is defined as being attached to said capillaries by means of polymerizing or gluing a connector body around the capillaries.

In some embodiments the connector uses a reusable clamp to temporarily hold and align the capillaries together for penetrating the deformable wall.

There is provided a microfluidic chip according to the invention, comprising a grid to support at least one biological cell, wherein the grid is in fluid connection with said channel.
A grid is here defined as a very small culture dish which is suitable for a cell(s) that can attach to the bottom of the grid or cells that stay in suspension. The bottom of the grid can consist of glass or plastics such as polystyrene, which can used as such or can be coated, for example with collagen or another cellular adherence.

In some embodiments a grid is used to grow cells inside a microfluidic chip. The chip is placed in a culture chamber and can be viewed under a microscope.

In some embodiments a grid separates two chambers. In these environment the cells can be polarized by supplying different chemical agents on both sides during growth in order to form a polarized single cell layer.

In some embodiments a grid is placed in the flow path of the injected substance to filter the substance flowing through the grid. Large particles such as cells or protein aggregates are captured by the grid and analyzed under a microscope.

In some embodiments a grid is used to grow cells first, until a monolayer of cells fills up most of the grid area. Said body of the microfluidic chip is then pressed onto the grid resulting in a microfluidic chip containing some chambers or channels filled with cells. The other cells that are pressed into the body die of lack of air and or medium. The cells obtained inside the chambers are now of the same cell culture, allowing for the diagnosis of reaction of these cells to different micro environments or signals provided in the different chambers.

In some embodiments a grid is used to enable a simple fixation of cells for staining and or later viewing purposes. The cells are grown on a grid inside the microfluidic chip. The body of the chip is at a certain time separated from the grid, leaving only the grid and cells attached to the grid. The cells on the grid can then be fixated using standard fixation techniques.

There is provide a microfluidic chip according to the invention, wherein said grid is suitable for use in an electron microscope.
Grids suitable for cryo electron microscopy include but are not limited to holey carbon (Journal of Cell Science 2002, 115, 1877-1882).
Cryo electron microscopy is here defined as a method whereby a grid containing biological specimen is first rapidly frozen preferably in liquid ethane near liquid nitrogen temperature to keep the structure of the biological specimen intact. If the sample layer on top of the grid is too thick for analysis, thin slices are cut with a diamond knife in a cryoultramicrotome at temperatures lower than -135 °C (devitrification temperature). Then the frozen grid is mounted inside an electron microscope for analysis.
An electron microscope uses the scattering of an electron beam, collected onto a detector to obtain detailed information, down to the size of atoms, of the sample. Electron microscopes include but are not limited to transmission electron microscopes and electron tomography microscopes.

In some embodiments cells are grown onto a grid suitable for electron microscopy. The advantage is that cells are monitored during growth, and later analyzed using the electron microscope, the results can be combined to obtain detailed analyses of selected cells.

There is provided a microfluidic chip according to the invention, comprising a membrane with means to separate two channels, a channel and a chamber or two chambers.

In some embodiments a semi permeable membrane is used to separate two fluids, which is permeable to some types of molecules.
Applications include, but are not limited to (i) exchanging the solution in which macromolecules or cells are dissolved or suspended (ii) concentrating of macromolecules (iii) introducing small (signaling, modifying) compounds in solutions or suspensions of macromolecules. In these cases, small molecules can pass through the membrane, whereas macromolecules or cells are retained.

In some other embodiments a membrane is used to pump or extract fluids due to osmotic pressure.

There is provided a microfluidic chip according to the invention, comprising multiple channels that intersect at least at one point, at this at least one intersection point said multiple channels are in fluid connection with each other.

There is provided a microfluidic chip according to the invention, wherein at least one chamber is located at the at least one intersection point whereby the chamber is in fluid connection with at least one of the intersecting channels.

There is provided a microfluidic chip according to the invention, wherein a plurality of the intersection points is present, preferably oriented in an array.

There is provided a microfluidic chip according to the invention, wherein a plurality of chambers is present, preferably oriented in an array.

### Methods of use of multiple chambers or channels

In protein crystallography, many different combinations of buffers, ions, precipitants and other small molecules need to be tested in order to identify the (often unique) conditions that induce or promote the crystallization of a protein. Usually it takes days to weeks before crystals appear and a constant, sealed environment is required to keep such protein solutions stable for such prolonged periods.

In a completely different application, aimed at identifying the (potential) interaction partner(s) of a protein, nucleic acid or other bio-macromolecule, it is necessary to bring this protein in contact with a multitude of potential interaction partners and then measure a physical characteristic of the protein that changes upon complex formation. For instance, the potential interaction partners may be peptide fragments of proteins, immobilized on a glass plate (e.g. www.pepscan.com). In typical applications, an array of potential interaction partners immobilized on a glass, silicon or other support, is flushed with a solution containing the macromolecule. However, if only very small amounts of macromolecule are available or if the interaction is transient, this method is not be sensitive enough. In such cases it is beneficial to divide the array of potential partners into separate nano-chambers, and flowing the macromolecule through all the chambers separately, testing each potential partner in succession.

In yet another application, the interactions between cells and molecules are studied, for instance the signaling function of a hormone or other signaling molecule, which induces a response in cells that have receptors specific for that signaling molecule expressed on their surface. Here the cells or the molecules may be immobilized in arrays. Similarly to the above considerations, in certain applications it is beneficial to physically divide the individual tests into separate chambers. The effect of chemotherapeutic agents of cellular signaling processes in cells sensitive versus cells resistant to these chemotherapeutic agents can be analyzed. In particular, the activation of specific apoptosis processes can be studied.
For these and other purposes it is beneficial to have an array of separate chambers that allows simultaneously and/or sequentially testing of a multitude of conditions with a setup described below.

In some embodiments the intersection of channels is used to fill channels with a substance and allow diffusion to slowly change the conditions in the channels. As two channels containing a different substance slowly mix a gradient of concentrations is obtained.

In some embodiments the intersection of channels is used to allow particles to be dragged using optical or magnetic tweezers from one channel or chamber into another channel or chamber.

In some embodiments dragging cells from one channel or chamber to another one is used to monitor the response of the cell to different environments.

In some embodiments cells are dragged from one channel or chamber to another channel or chamber containing different compounds or chemical agents, or gradually increasing or decreasing concentration thereof. Reactions of the same type of cells to many different concentration and combinations of chemical agents is done in one chip, thus allowing for high throughput cell diagnosis.

In some embodiments dragging proteins or cells from one channel or chamber to another coated channel or chamber is used to study the interaction with the coating of that particular channel or chamber. Types of experiments to study interaction in the setup include but are not limited to: measuring interaction force, diagnosing physical response and include the use of different solutions, different agents, different coatings and different proteins and combinations thereof.

There is provided a microfluidic chip according to the invention, wherein at least one first channel or chamber is located close to a second channel or chamber with means to heat or cool the second channel or chamber using a hot or cold substance flowing through the first channel or chamber.

In some embodiments heating of cooling a channel or chamber is used to control the temperature without the need for a whole culture chamber.

In some embodiments heating and or cooling of proteins or cells is done to study the dynamic behavior to temperature change.

In some embodiments heating or cooling proteins is done to activate them for use or visualization.

In some embodiments heat is used to pump a substance from a filled chamber in fluid connection to a channel by means of expanding the substance inside the filled chamber such that it is pushed through the channel. Such process is also called heat driven transport.

In some embodiments cooling a chamber in fluid connection with a channel both located inside a gas impermeable substance is used to contract the fluid, and pull the fluid from the channel to the chamber.

In some embodiments cooling is used to (rapidly) freeze a channel or chamber in order to fixate a specific state for detailed analysis.

In some embodiments rapid freezing a chip containing cells is used to enable the use of a chip in an non sterile environment. As the cells are contained in a sterile chip, only the fluids to use the chip or grow the cells have to be sterile. This allows for cell studies without the need of a flow cabinet.

There is provided a microfluidic chip according to the invention, wherein at least one first channel is located close to a second channel or chamber with means to supply gas to the second channel or chamber

In some embodiments supplying gas from one channel or chamber into a neighboring channel or chamber is used to control the dissolved CO₂ and O₂ without the need to have the microfluidic chip inside a culture chamber when studying the proteins and or cells inside the chip.

In some embodiments supplying gas from one channel or chamber into a neighboring channel or chamber is used to study the dynamic response to the change of dissolved gas.

In some embodiments gas is supplied to trigger or feed a chemical reaction inside a channel or chamber. Because off the capillary forces inside microfluidic gas permeable bodies and the low volumes inside gas tight bodies it is not possible to simply connect a gas channel to a non gas channel inside a microfluidic chip. A solution is to use a gas permeable body and supply the gas from a neighboring channel to the target channel or chamber.

There is provided a microfluidic chip according to claim to the invention, wherein one or more electrodes are inserted into a channel or a chamber with means to apply an electric field or to supply electrons to the substance inside the channel or chamber.

There is provided a microfluidic chip according to the invention, wherein the electrodes essentially consists of glass capillaries.

In some embodiments the electrodes provide electrons to ionize molecules inside a channel or chamber.

In some embodiments the electrodes provide an electric field to separate different chemical compounds inside a channel or chamber.

In some embodiments the conductance between two electrodes is measured to monitor changes due to substance changes.

In some embodiments the conductance change between two channels or chambers separated by a cell growth supporting grid is a measure for the formation of a monolayer of cells onto that grid.

In some embodiments the electrodes are injected through connected capillaries.

There is provided a microfluidic chip according to claim to the invention, wherein one or more channels or chambers are treated with light.

In some embodiments light is used to activate proteins inside a channel or chamber.

In some embodiments infrared light is used to heat the substance inside the channel or chamber.

There is provided a microfluidic chip according to the invention, wherein one or more glass fibers are inserted into said microfluidic chip into or next to a channel or a chamber with means to supply a direct source of light at a specific location inside or next to the channel or chamber.

In some embodiments a glass fiber is used in combination with a strong light source to activate a biochemical molecule inside a channel or chamber, this technique is also called photo dynamic activation.

In some embodiments a glass fiber is used to supply light for optical analysis without the need of a external lighting system.

In some embodiments a glass fiber is used to extract light for optical analysis without the need of external lens systems.

In some embodiments a combination of glass fibers is used for both light supply and detection of light.

In some embodiments a glass fiber is used to supply light to fluorescent proteins or particles inside a specific channel or chamber.

In some embodiments a glass fiber is injected through a connected capillary.

There is provided a microfluidic chip according to the invention, comprising a waveguide leading to or leading inside a channel or a chamber with means to illuminate a part of the substance inside a channel or chamber.
The waveguide is preferably a optical waveguide, wherein the light is confined in a layer of transparent material by means of total internal reflection. This occurs when the angle of incidence between the propagation direction of the light and the normal, or perpendicular direction, to the material interface is greater than the critical angle. The critical angle depends on the index of refraction of the materials used, which may vary depending on the wavelength of the light. To lower the critical angle of the waveguide, it can be coated with second material having a low refractive index. See also EP0205236.

There is provided a microfluidic chip according to the invention, comprising a waveguide leading to or leading inside a channel or a chamber with means to illuminate a part of the substance inside a channel or chamber.

In some embodiments a waveguide is used to perform dark field microscopy inside a microfluidic chip.
Dark field microscopy is here defined as a light microscope setup where the light to illuminate the sample has no direct light path to the microscope detector. As a result only light reflected by the sample is detected.

In some embodiments the body of the microfluidic chip comprises a surface plasmon resonance sensor, in fluid connection with a channel or chamber of the microfluidic chip. Using surface plasmon resonance imaging, molecules can be detected using a fingerprinting technique, that is results are correlated with known results. An example of surface plasmon resonance imaging is explained in US5327225.

There is provided a system comprising a microfluidic chip according to the invention and a capillary.

There is provided a system comprising a microfluidic chip according to the invention and a glass capillary.

In some embodiments a capillary is used to bring a substance into the microfluidic chip.

In some embodiments a capillary is used to extract a substance from a microfluidic chip.

In some embodiments a capillary is used to bring a substance into the microfluidic chip and at another time used to extract a substance from the microfluidic chip or vice versa.

In some embodiments an absorbing member is used to extract fluid from a microfluidic chip or from a capillary connected to a microfluidic chip.

There is provided a system according to the invention, wherein anti-clogging features are present to prevent clogging of the capillary when penetrating the deformable substance with a first free end.
While connecting the capillary to the microfluidic chip it could happen that some deformable wall particles detach and get into the capillary. This happens as the deformable wall material forms multiple cracks when the capillary is pushed through. To prevent this ant-clogging features are developed.

There is provided a system according to the invention, wherein the anti-clogging features comprises filling the capillary with an incompressible substance and closing off a second free end of the capillary.
An incompressible substance is here defined as a solid bar or solid particles in a fluid or a fluid or a combination thereof.
When the capillary is filled with an incompressible substance and sealed at the other end the incompressible substance is trapped inside the capillary. Particles could come off while penetrating the deformable wall, but they cannot enter the capillary, because the particles formed are simply pushed aside while the capillary enters. There is however a small chance that at the end one particles is pushed into the channel or receiving chamber of the microfluidic chip.

There is provided a system according to the invention, wherein the anti-clogging features comprises the first free end of the capillary being beveled preferably at 45 degrees or less.
In this system the capillary forms only one sharp tip, what results is a single crack in the deformable wall material while the capillary is pushed through. With only one crack the rest of the capillary simply extends this crack to have enough room to slide through. In this system as a result there are no detached particles formed.

There is provided a system according to the invention, wherein the body essentially consists of PDMS and wherein the anti-clogging features comprises the use of a capillary having an outer diameter of preferably less than 150 µm. When a small diameter is chosen for the capillary the tip is sharp enough to enforce only one crack as mentioned earlier above. So also in this case the deformable wall doesn't release particles that could clog the capillary.

In some embodiments a connections are needed that can withstand a higher pressure. In these embodiments the connection is made using one of the methods described above, and then an extra layer of polymer or gluing substance is applied to the capillaries and the microfluidic chip at and around the connection points, thereby connecting the capillaries stronger to the microfluidic chip.

There is provided a method for investigating a substance, the method comprising:
- providing a system according to the invention, whereby
- a capillary is brought into fluid connection with a channel or chamber of the microfluidic chip by penetrating the deformable substance with the capillary
- supplying a substance through the capillary into the channel or chamber
- investigating a substance in the channel or chamber using a detection device.

There is provided a method for investigating one or more cells, the method comprising:
- providing a system according to the invention, whereby
- a capillary is brought into fluid connection with a channel or chamber of the microfluidic chip by penetrating the deformable substance with the capillary
- supplying the one or more cells through the capillary into the channel or chamber
- investigating the one or more cells in the channel or chamber using a detection device.

There is provided a method according to the invention wherein one or more channels or chambers are coated with one or more types of atoms, molecules, cells or a combination thereof.

There is provided a method according to the invention, wherein the body comprises one or more receiving channels, each in fluid connection with two or more supplying channels such that a substance gradient is created through laminar flow inside the one or more receiving channels.

There is provided a method according to the invention, wherein the body comprises one or more supplying channels, each in fluid connection with two or more receiving channels such that a substance is divided over the two or more receiving channels.

There is provided a method according to the invention, wherein the body comprises one or more capillaries, containing a first substance, ending in a channel or a chamber containing a second substance, such that a fluid flow through the one or more capillaries into the channel or chamber creates a first substance coaxially surrounded by the second substance inside the channel or chamber.

There is provided a method according to the invention, wherein the body comprises one or more capillaries ending in a channel or a chamber containing a substance with means to extract an amount of the substance from the channel or chamber.

There is provided a method according to the invention, wherein cells are flowing through one or more of the channels thereby being subject to the substance gradient in the receiving channel.

There is provided a method according to the invention, wherein cells are essentially situated stationary in the receiving channel and are treated with different substance gradients provided through said channels.

There is provided a method according to claim to the invention, comprising
- the coating of one or more channels with at least one type of atom, molecule, cell or a combination thereof and
- investigating the response of cells in a substance flowing through the one or more coated channels.
   There is provided a method according to the invention, wherein the coating essentially consists of cell receptor binding molecules and wherein cells are selected from a medium containing cells by the binding to said cell receptor binding molecules.

In some embodiments cells are selected on multiple receptor molecules, by successively binding and release:
- first, binding of cells having a first receptor by transport of cells through a channel containing a coating of said first receptor binding molecules
- then second, release of bound cells, through the supply of a substance containing a high concentration of said first receptor binding molecules
- then third, as cells are released, the substance containing previously bound cells is directed through another channel containing a second cell receptor binding molecules coating
- the second and third step can be repeated in order to select cells containing more than two receptor molecules.

There is provided a method of constructing a microfluidic chip as described in the invention containing at least one optically flat surface, said method comprises
- providing a mould containing a bottom, at least one side and a top, of which the bottom contains the channel structure in the form of ridges, and of which the top essentially consists of an optically flat solid, and of which one side contains an opening to allow filling of the mould
- filling of the mould preferably using PDMS to create a optically flat surface of the PDMS against the optically flat surface in the mould
- curing the PDMS
- releasing the PDMS from the mould
- constructing the channels of the body by placing a solid structure on top of the images of the ridges in the mould, said solid structure consisting preferably of glass to allow viewing inside the channel.

There is provided a method of constructing a microfluidic chip as described in the invention suitable for 4Pi microscopy, said method comprises
- providing a mould containing a bottom, at least one side and a top, of which the bottom contains the channel structure in the form of ridges, at least one of said ridges having a optically flat surface touching the top of the mould, said top essentially consists of a microscope slide, and the side or bottom of the mould containing an opening to allow filling of the mould
- filling of the mould preferably using PDMS
- curing the PDMS
- releasing the PDMS from the mould
- constructing the channels of the by placing a second microscope slide on top of the images of the ridges, the created channel is stretched from glass bottom to glass top having two sides of the PDMS.
A 4Pi microscope is a confocal microscope with two opposing lenses. It is used for high resolution imaging of fluorescence.
It can be operated in three different ways: In a 4Pi microscope of type A, the coherent superposition of excitation light is used to generate the increased resolution. The emission light is either detected from one side only or in an incoherent superposition from both sides. In a 4Pi microscope of Type B, only the emission light is interfering. When operated in the Type C mode, both excitation and emission light are allowed to interfere leading to the highest possible resolution increase (~7 fold along the optic axis as compared to wide field fluorescence microscopy). A typical axial resolution of a 4Pi microscope is about 100 nm. A 4Pi microscope is also explained in W02004/061513A1.

### Brief description of the drawings

Figure 1 is a top view of a single channel inside a microfluidic chip comprising one connection point (A) or two (B).
Figure 2 is a top view of a single channel connected to a receiving chamber inside a microfluidic chip.
Figure 3 is a top view of a chamber inside a microfluidic chip.
Figure 4 is a top view of two channels inside a microfluidic chip.
Figure 5 is a side view of a microfluidic chip comprising a grid or membrane.
Figure 6 is a top view of a crossing of channels inside a microfluidic chip.
Figure 7 is a top view of a crossing of multiple channels connected to a chamber inside a microfluidic chip.
Figure 8 is a top view of an array of chambers inside a microfluidic chip.
Figure 9 is a schematic top view of an array of chambers which is loaded in one direction and reloaded in another direction.
Figure 10 is a top view of before (A) and after (B) making a connection to a microfluidic chip using a capillary.
Figure 11 is a top view of before (A) and after (B) making a connection to a microfluidic chip comprising solid receiving chambers.
Figure 12 is a top view of before (A) and after (B) making a fluidic connection to a microfluidic chip comprising open channels made form a solid.
Figure 13 is a top view of making a connection to a microfluidic chip using a filled capillary.
Figure 14 is a top view of making a connection to a microfluidic chip using a beveled capillary
Figure 15 is a top view of making a connection through a PMDS deformable solid wall to a channel or receiving chamber inside a microfluidic chip using a thin capillary.
Figure 16 is a side view of four different preferred embodiments of microfluidic chips.
Figure 17 is a top view of a microfluidic chip comprising multiple chambers which can be addressed individually at different times.
Figure 18 is a top view of a microfluidic chip comprising multiple chambers which can be addressed individually at the same time.
Figure 19 (A) shows a plurality of chambers addressable from the bottom by one or more capillaries. In this figure B-D show a side view of a chamber array.

### Detailed description of the drawings

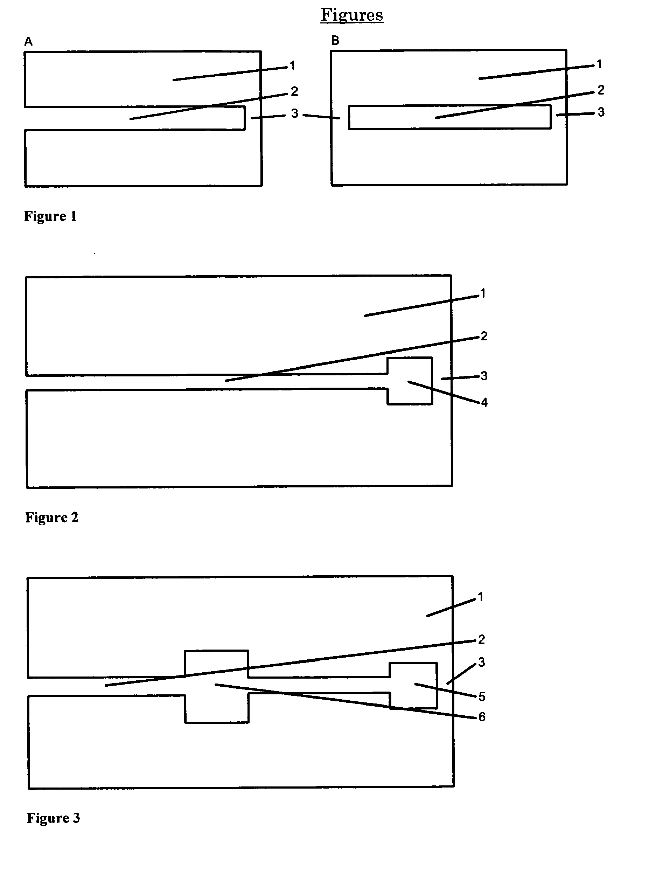

The most basic version of a microfluidic chip is shown in Figure 1. This is a top view of a microfluidic chip, made in a deformable solid material (1), in which there is a channel situated (2). The channel can be connected from the side through the deformable penetrable wall (3). On the left (A) there is only one side which allows a capillary connection (right), thus the fluid can freely move out of the chip on the other side. Shown on the right (B) both left and right side allow for a capillary connection.

In Figure 2 the channel is to thin for a capillary to fit in. This top view shows how a channel (2) can be expanded with a larger receiving chamber (4) also enclosed inside the deformable solid (1) to be able to make a connection with a capillary through the deformable penetrable wall (3).

Figure 3 shows a chamber (6) inside a deformable solid chip (1). On one side the chamber is connected to a receiving chamber or channel (5), closed off by a deformable penetrable wall (3). On the other side the chamber ends in a channel (2) to allow for (re)filling the chamber.

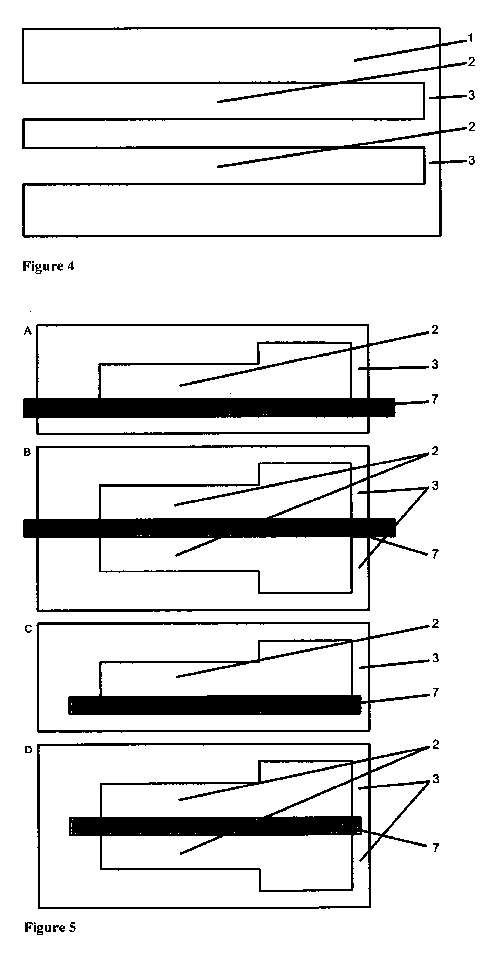

In Figure 4 a multiple of channels(2) inside a basic chip is drawn. More channels are used to perform different (control) experiments inside the same chip.

Figure 5 is a side view of a microfluidic chip comprising a grid or membrane (7). Preferred embodiments A and B are used when it is desired to be able to remove the grid or membrane from the microfluidic chip. The chip is smaller than the grid or membrane allowing the user to pull off the chip's parts from the grid or membrane, provided that the grid or membrane is strong enough.

In some embodiments the chip is not bound to the membrane or grid but simply pressed upon the grid or membrane. This then allows for an easy removal.

In some embodiments the grid is used for detailed analysis under an electron microscope.

In some embodiments the grid or membrane is used as a cell support.
In some embodiments the grid or membrane is used to filter molecules, proteins or cells.

In some embodiments the semi permeable membrane is used to separate two different environments for some specific particles.

In some embodiments there is a chamber or channel (2) located on both sides or the grid or membrane (B or D).

In some embodiments this is used to polarize cells growing onto the grid or membrane.

In some embodiments the membrane used is very fragile, then the membrane can be supported by a chamber or channel's wall (A or C).

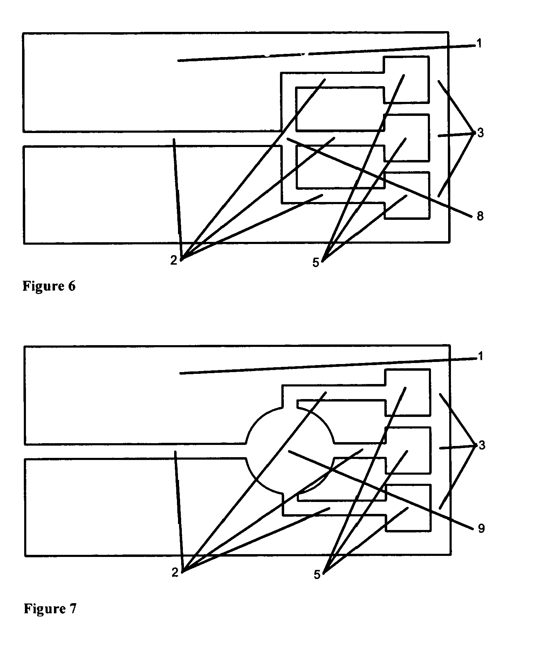

Figure 6 shows how multiple channels can be combined into one channel. Starting from multiple receiving channels or chambers (5) the channels (2) add up (8) to one receiving channel (most lefi;). In this receiving channels the fluids flow laminar next to each other. Due to the low Reynolds number there is no mixing, only very slow diffusion.

When a larger area is needed to grow cells a chamber (9) can be used as shown in Figure 7.

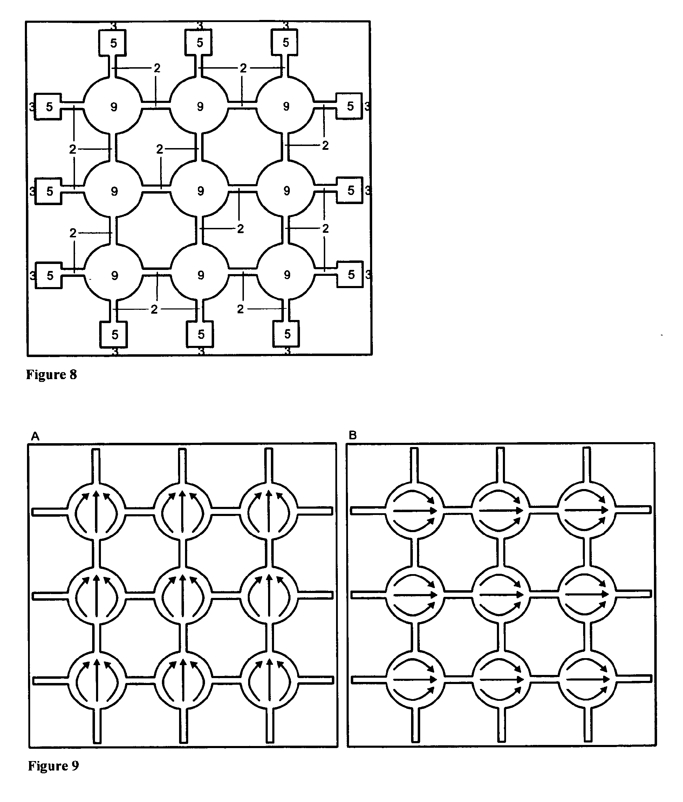

In some embodiments many conditions are tested at the same time using a grid of chambers(9), as shown in Figure 8. Because the fluidic connection of the capillaries to the chip are very small, many connections are possible. This makes it possible to create a large array of chambers inside one microfluidic chip. When the chambers are connected to each other with channels (2) diffusion creates a slowly changing environment. Using different substances to fill the chambers a gradient is created in each chamber. This allows the researcher to test the reaction of cells or proteins to many different concentrations and stimuli.

In some embodiments the chambers are coated with different coatings to test for different cell or protein responses.

In some embodiments the different gradients are used to test the ideal environment to create protein crystals.

In some embodiments the chambers are coated with different cell receptors, molecules or proteins. Then under a microscope the response of cells to these coatings can be monitored.

In some embodiments optical tweezers are used to drag cells form one chamber (environment) to another. In this setup multiple conditions can be tested with the same culture of cells.

In some embodiments these tweezers are used to perform force measurements of cell-cell, protein-cell or protein-protein interactions inside these chambers.

In some embodiments some chambers are coated with a metal layer. Then these chambers can be used to perform surface plasmon resonance imaging.

In some embodiments the cells are first grown onto a plate and then an open chip containing the different chamber is pressed onto this plate. Cells that are not located inside chamber die of lack of medium. Cells inside chambers are kept alive, and these cells are now of the same culture. Different environments are created inside these chambers to test the reactions of these cells.

Figure 9 shows how an array of chambers can be filled in one direction (A) and refilled in another direction (B). The size of the array is arbitrary chosen, and can be enlarged if needed.

In some embodiments this array is used to first coat the chamber by filling the chambers in one direction, flush in the same direction, then the cells, proteins or objects that one likes to study are loaded in the other direction.

In some embodiments this procedure is repeated to select for multiple properties. For example:
First the chambers are coated with different cell-receptor binding proteins (A). After flushing the remainder of the coating proteins the chambers are filled from the left (B) with different cells that might have the cell receptors. All the chambers are now filled with cells. Then the chambers are flushed again with cell receptor binding proteins to release them from the chamber walls. this is done in again from the left (B). Cells are now off and some cells are attracted to other cell receptor binding molecules in the coating of the channels they are pushed through. The cells that stick for the second time have now at least two cell receptors present. This procedure can be repeated as many times as there are rows and columns in the array (three in this example).

In some embodiments one likes to test how different conditions affect cells and or proteins. When cells are growing in multiple chamber such as in an array as shown in Figure 9, one can change conditions in each chamber by means of a specific treatment inside a chamber with different radiation into that chamber, electrodes into a specific chamber, or heating with infrared light.

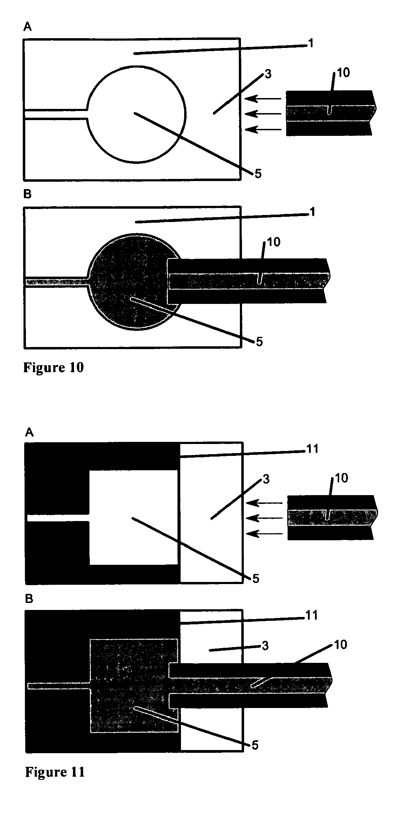

Figure 10 shows the method of connecting a capillary to a microfluidic chip created from a deformable solid material. The before (A) and after (B) situation is drawn of a microfluidic chip comprising channels made in deformable penetrable solid material. The deformable penetrable wall (3) is penetrated by a capillary (10) until the receiving chamber or channel (5) is reached. The deformable penetrable wall seals the connection creating a leakage free fluidic connection.

In some embodiments, shown in Figure 11, a solid chip (11) comprising solid receiving chambers or channels (5) is used. Then the solid receiving chambers or channels are sealed with a deformable penetrable material (3). The connection is made by sticking the capillary through the deformable and penetrable wall.

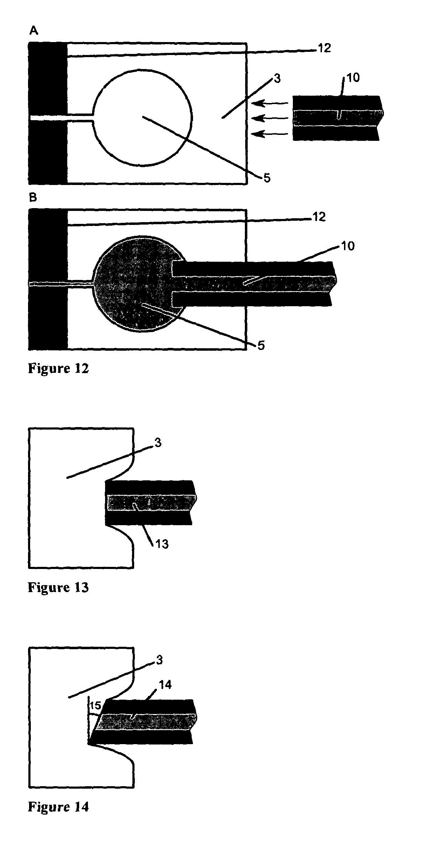

When, in some embodiments only open channels are made, a precise deformable solid receiving chamber or channel can be attached to the solid (12). A connection is then again made in the same way by sticking the capillary into the receiving channel or chamber, see Figure 12.

To prevent clogging of the capillary, three different methods can be used. In Figure 13 is shown how a filled capillary is pressed into a deformable and penetrable wall. The substance inside the capillary (13) prevents deformable wall particles to enter the capillary.

Another method for prevention of clogging is shown in Figure 14. Here a capillary (14) is beveled (15) to prevent the creation of deformable wall particles that could clog the capillary. When a straight cut capillary is used the deformable wall is torn apart at different sides of the capillary. Then these different cracks lead to particles that enter the capillary. When the capillary is beveled the deformable wall has one highest pressure point at the tip of the capillary (sharp end). This one highest pressure point creates only one crack that simply is widened as the capillary is pressed through.

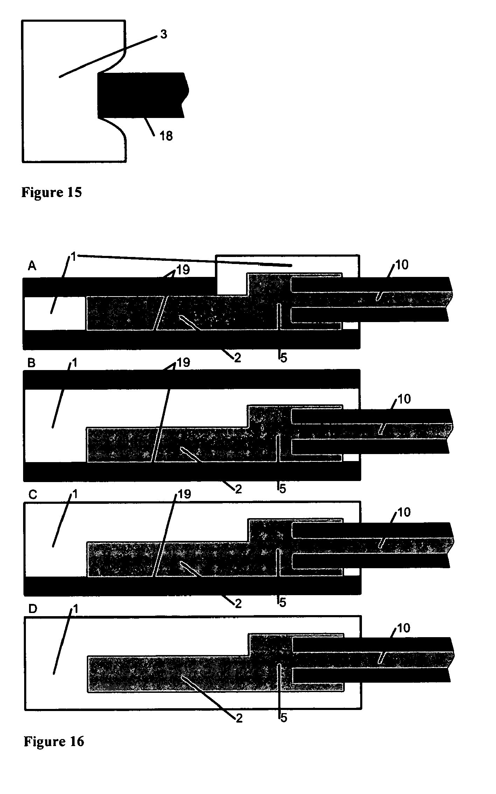

Yet another method to prevent clogging is shown in Figure 15. Here preferably PDMS is used as deformable penetrable wall material. When a small diameter capillary is used (18), preferable thinner than 150 µm outer diameter, there is no need to bevel the tip of the capillary. The tip is that sharp that the PDMS rather cracks at one side than at multiple sides.

Four different preferred embodiments of microfluidic chips are shown in Figure 16. This figure shown the side view of different microfluidic chips.
In some embodiments the channel needs to be as thin as possible (A). This chip is suitable to use in 4Pi microscopy where it is only allowed to have a very thin space between condenser and objective lenses.

In some embodiments a channel between two glass plates is used to integrate electronics on both sides of the channel. This allows for a stimulation and detection system on opposite sides in one channel or chamber.

In some embodiments the simulation and detection make use of light, when a transparent polymer is chosen (1) all shown preferred embodiments apply for this type of use.
To allow for a simple molding technique and a stronger design a design shown in B may be used. As solid material (19) preferably glass is used. The glass plate between the objective lens and the channels (the bottom plate) is best be chosen to be a microscope slide. If space allows a somewhat thicker chip the other plate is preferably a thicker object glass plate. Two plates of glass are also preferred when one likes to prevent the attraction of dust by the PDMS body (1).
Preferred embodiment C shows the same as in B only here one glass plate is omitted to allow for better gas control in the channels. This is preferred when the control of medium inside the channels is done from the outside by laying the chip in a temperature and gas controlled bath for example.
Preferred embodiment D shows an all polymer chip. Less material offers less distortion under a microscope, thus this design is best in that respect. When an immersion fluid is used for viewing, or when the chip is used a dust free environment this is the preferred embodiment.
In some embodiments preferred embodiment A, B or C is used to integrate the use of electronics inside the chambers. The solid structure at the bottom (A,B,C) or at the top (A) contains the necessary electronic circuits.

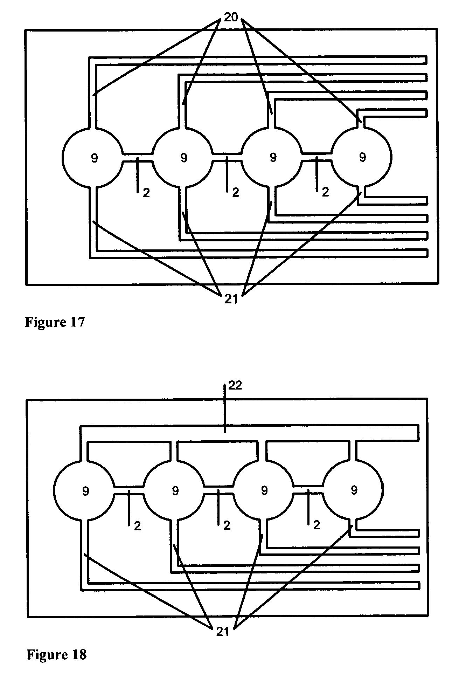

Figure 17 is an example design of multiple chambers (9) which can be addressed individually. It is possible to add more chambers to the side in a similar fashion. Using this chip it is first completely filled. Then the chambers can be individually be refilled by closing off all channels except for the channel on top (20) and at the bottom (21) of the chosen chamber. This allows for a refill of only that specific chamber. The interconnection channels (2) between the chambers is used to allow for a slow diffusion or transport.

When there are multiple chambers needed, without the need for an individual refill of chambers some connections can be omitted. This is shown in Figure 18. Here multiple chamber are filled from the bottom (21) at once. The exit channels are combined into one (22). Also this design allows for more chambers if needed. These chambers are then added on the side in a similar fashion.

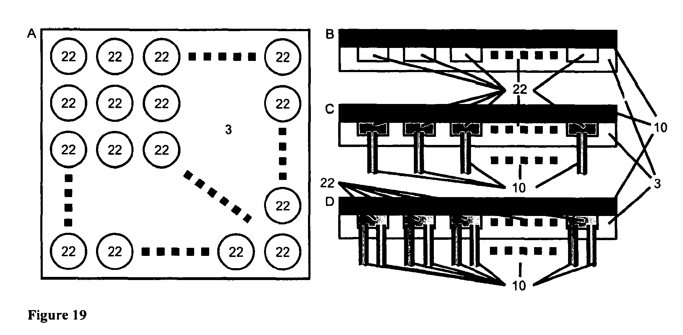

In Figure 19 a plurality of chambers (22) is shown made in a PDMS substrate (3). The chambers are closed off by a solid (10), shown in B. In C it is visible how the different chambers can be addressed at once from below, using capillaries. In D it is shown that also multiple capillaries can be injected into one chamber. After injection the capillaries can be removed, the fluid is stuck inside the chamber by means of capillary force. The channel that was created when injecting the capillary is closed again by action of the deformable solid (3). The PDMS chamber array has three advantages to well plates. First advantage is that a much smaller volume is used, requiring less material. A second advantage is that the fluid is enclosed by PDMS, allow for gas exchange, but at the same time disallowing evaporation of the tiny amount of liquid used. A third advantage is that the plate is much thinner, allowing for better observation using light microscopy.

In some embodiments the array of chambers is used as a substitute for multi well plates.

In some embodiments the array of chambers is used to test for best crystallizing conditions for proteins.

In some embodiments the method of connecting at the bottom is used in combination with other microfluidic chip techniques described above.

In some embodiments the array of chambers is closed of with a glass plate to allow for viewing through the array chambers using a transmission microscope.

In some embodiments the glass plate used to close off the array of chambers comprises electronic circuits.

In some embodiments the glass plate with electronics is reused after removal of one PDMS array. The glass plate containing electronics is then cleaned, and a new (clean) PDMS array is attached.

The body of the microfluidic chip in Figure 1 can be created using a mould, said mould contains the channel structure in the form of ridges on the bottom of the mould. The mould has 4 sides of which one has an extra channel on top to allow filling with an excess of PDMS. The excess of PDMS can retract during the curing process to prevent improper curing due to shrinkage.
The PDMS pre-polymer (Sylgard 184, Dow Corning) is made by mixing the base and curing agent in a mass ratio of 10:1. The mixture is degassed using a vacuum chamber. Three times the air pressure is lowered to extract air, then the mixture placed to rest for 30 minutes.
After resting the PDMS mixture is slowly poured into the mould, a little more than fits into the mould allowing for filling of the excess channel.
Then a glass plate is placed on top to create a first flat surface of the chip.
The PDMS is cured, preferably in room temperature for one day to prevent a high shrinkage. When a faster curing is needed an oven can be used, this however results in a slightly higher shrinkage of the PDMS.

This technique can also be used to create the bodies of other chips according to the invention.
After the body is finished, some other chips require multiple layers or production steps, a glass plate is pressed on top to create the microfluidic channels.

## Claims

1. A microfluidic chip comprising a body with at least one channel and means for connecting at least one capillary to said body so that the at least one capillary is in fluid connection with said at least one channel, wherein the means for connecting comprise a deformable substance closing off the at least one channel and being penetrable by said at least one capillary.

2. A microfluidic chip according to claim 1, wherein the body contains at least one receiving chamber in fluid connection with said at least one channel and said deformable substance closing off at least one side of the receiving chamber, so that the free end of the at least one capillary can be placed in the at least one receiving chamber.

3. A microfluidic chip according to claim 1 or 2, wherein at least one analysis chamber is present in fluid connection with at least one channel.

4. A microfluidic chip according to any one of claims 1-3, having a top and a bottom wall, at least one of which allows inspection of the substance in the at least one channel or chamber using a microscope, as well as having at least one sidewall, the deformable substance closing off the said at least one channel or receiving chamber and being penetrable by said at least one capillary, said deformable substance extending along at least part of said sidewall, so that the said at least one capillary can be mounted in a plane parallel to said top or bottom wall.

5. A microfluidic chip according to any one of claims 1-4, comprising means to connect multiple capillaries to at least one sidewall, allowing for a simultaneous parallel connection.

6. A microfluidic chip according to any one of claims 1-5, comprising a grid to support at least one biological cell, wherein the grid is in fluid connection to said channel.

7. A microfluidic chip according to claim 6, wherein said grid is suitable for use in an electron microscope.

8. A microfluidic chip according to any one of claims 1-7, comprising a membrane with means to separate two channels, a channel and a chamber or two chambers.

9. A microfluidic chip according to any one of claims 1-8, comprising multiple channels that intersect at least at one point, at this at least one intersection point said multiple channels are in fluid connection with each other.

10. A microfluidic chip according to claim 9, wherein at least one chamber is located at the at least one intersection point whereby the chamber is in fluid connection with at least one of the intersecting channels.

11. A microfluidic chip according to claim 9, wherein a plurality of the intersection points is present, preferably oriented in an array.

12. A microfluidic chip according to claim 10 or 11, wherein a plurality of the chambers is present, preferably oriented in an array.

13. A microfluidic chip according to any one of claims 1-12, wherein at least one first channel or chamber is located close to a second channel or chamber with means to heat or cool the second channel or chamber using a hot or cold substance flowing through the first channel or chamber.

14. A microfluidic chip according to claim to any one of claims 1-13, wherein at least one first channel is located close to a second channel or chamber with means to supply gas to the second channel or chamber

15. A microfluidic chip according to claim to any one of claims 1-14, wherein one or more electrodes are inserted into a channel or a chamber with means to apply an electric field or to supply electrons to the substance inside the channel or chamber.

16. A microfluidic chip according to claim 15, wherein the electrodes essentially consists of glass capillaries.

17. A microfluidic chip according to claim to any one of claims 1-16, wherein one or more channels or chambers are treated with light.

18. A microfluidic chip according to claim to any one of claims 1-17, wherein one or more glass fibers are inserted into said microfluidic chip into or next to a channel or a chamber with means to supply a direct source of light at a specific location inside or next to the channel or chamber.

19. A microfluidic chip according to any one of claims 1-18, comprising a waveguide leading to or leading inside a channel or a chamber with means to illuminate a part of the substance inside a channel or chamber.

20. A system comprising a microfluidic chip according to any of the claims 1-19 and a capillary.

21. A system comprising a microfluidic chip according to any of the claims 1-19 and a glass capillary.

22. A system according to claim 20 or 21, wherein anti-clogging features are present to prevent clogging of the capillary when penetrating the deformable substance with a first free end.

23. A system according to claim 22, wherein the anti-clogging features comprises filling the capillary with an incompressible substance and closing off a second free end of the capillary.

24. A system according to claim 22, wherein the anti-clogging features comprises the first free end of the capillary being beveled preferably at 45 degrees or less.

25. A system according to claim 22, wherein the body essentially consists of PDMS and wherein the anti-clogging features comprises the use of a capillary having an outer diameter of preferably less than 150 µm.

26. A method for investigating a substance, the method comprising:
• providing a system according to claim 20-25, whereby
• a capillary is brought into fluid connection with a channel or chamber of the microfluidic chip by penetrating the deformable substance with the capillary
• supplying a substance through the capillary into the channel or chamber
• investigating a substance in the channel or chamber using a detection device.

27. A method for investigating one or more cells, the method comprising:
• providing a system according to claim 20-25, whereby
• a capillary is brought into fluid connection with a channel or chamber of the microfluidic chip by penetrating the deformable substance with the capillary
• supplying the one or more cells through the capillary into the channel or chamber
• investigating the one or more cells in the channel or chamber using a detection device.

28. A method according to claim 26 or 27 wherein one or more channels or chambers are coated with one or more types of atoms, molecules, cells or a combination thereof.

29. A method according to claim 26 or 27, wherein the body comprises one or more receiving channels, each in fluid connection with two or more supplying channels such that a substance gradient is created through laminar flow inside the one or more receiving channels.

30. A method according to claim 26 or 27, wherein the body comprises one or more supplying channels channels, each in fluid connection with two or more receiving channels such that a substance is split into the two or more receiving channels.

31. A method according to claim 26 or 27, wherein the body comprises one or more capillaries, containing a first substance, ending in a channel or a chamber containing a second substance, such that a fluid flow through the one or more capillaries into the channel or chamber creates an first substance coaxially surrounded by the second substance inside the channel or chamber.

32. A method according to claim 26 or 27, wherein the body comprises one or more capillaries ending in a channel or a chamber containing a substance with means to extract an amount of the substance from the channel or chamber.

33. A method according to claim 27, wherein cells are flowing through one or more of the channels thereby being subject to the substance gradient in the receiving channel.

34. A method according to claim 27, wherein cells are essentially situated stationary in the receiving channel and are treated with different substance gradients provided through said channels.

35. A method according to claim to claim 33 or 34, comprising
• the coating of one or more channels with at least one type of atom, molecule, cell or a combination thereof and
• investigating the response of cells in a substance flowing through the one or more coated channels.

36. A method according to claim 27, wherein the coating essentially consists of cell receptor binding molecules and wherein cells are selected from a medium containing cells by the binding to said cell receptor binding molecules.

37. A method of constructing a microfluidic chip as described in claim 1-19 containing at least one optically flat surface, said method comprises
• providing a mould containing a bottom, at least one side and a top, of which the bottom contains the channel structure in the form of ridges, and of which the top essentially consists of an optically flat solid, and of which one side contains an opening to allow filling of the mould
• filling of the mould preferably using PDMS to create a optically flat surface of the PDMS against the optically flat surface in the mould
• curing the PDMS
• releasing the PDMS from the mould
• constructing the channels of the body by placing a solid structure on top of the images of the ridges in the mould, said solid structure consisting preferably of glass to allow viewing inside the channel.

38. A method of constructing a microfluidic chip as described in claim 1-19 suitable for 4pi microscopy said method comprises
• providing a mould containing a bottom, at least one side and a top, of which the bottom contains the channel structure in the form of ridges, at least one of said ridges having a optically flat surface touching the top of the mould, said top essentially consists of a microscope slide, and the side or bottom of the mould containing an opening to allow filling of the mould
• filling of the mould preferably using PDMS
• curing the PDMS
• releasing the PDMS from the mould
• constructing the channels of the by placing a second microscope slide on top of the images of the ridges, the created channel is stretched from glass bottom to glass top having two sides of the PDMS.
